# EUROPÄISCHE PATENTSCHRIFT

(11) **EP 0 736 750 B1**
(45) Veröffentlichungstag und Bekanntmachung des Hinweises auf die Patenterteilung: **02.05.2001**
(21) Anmeldenummer: 96102791.9
(22) Anmeldetag: 24.02.1996
(51) Int. Cl.: G01D 5/347, G01B 5/00

(54) **Positionsmesseinrichtung**
Position measuring device
Dispositif de mesure de positions

(30) Priorität: 06.04.1995 DE 19512892
(43) Veröffentlichungstag der Anmeldung: 09.10.1996
(73) Patentinhaber: Dr. Johannes Heidenhain GmbH, 83292 Traunreut (DE)
(72) Erfinder: Spanner, Erwin, Dipl.-Phys., D-83278 Traunstein (DE); Pechak, Peter, D-83371 Stein/Traun (DE)

(56) Entgegenhaltungen:
- EP-A- 0 566 828
- DE-A- 2 643 304
- DE-U- 9 309 310
- US-A- 4 569 137

## Beschreibung

Die Erfindung bezieht sich auf eine Positionsmeßeinrichtung gemäß dem Oberbegriff des Anspruches 1.

Es ist bereits bekannt, zur Vermeidung von thermischen Spannungen eine Maßverkörperung auf ihrem Trägerkörper mit Hilfe einer elastischen Klebeschicht zu befestigen wie dies in der DE-OS 25 05 587 beschrieben ist. Weiterhin ist vorgeschlagen worden, anstelle der durchgängigen elastischen Klebeschicht mehrere, durch Zwischenräume unterbrochene Gummistücke zu verwenden, auf die die Maßverkörperung aufgespannt wird und die für einen Ausgleich der thermischen Spannung zwischen Maßverkörperung und Trägerkörper sorgen sollen. Auch bei dieser, z.B. in der DE-PS 11 76 382, der DE-OS 33 12 534 und der US-PS 4,569,137 beschriebenen Art der Befestigung verbleiben jedoch Restkräfte in einer Größenordnung, die die Maßverkörperung in einem nicht tolerierbaren Ausmaß verformen. Nachteilig ist hier vor allem, daß die Maßverkörperung auch nach einem Temperaturausgleich nicht wieder reproduzierbar in ihre Ausgangslage zurückkehrt, sondern auf Grund von Reibungskräften eine undefinierte neue Lage einnimmt. Als Folge von länger andauernden Zwangskräften sind auch Verformungen beobachtet worden, die sich als Fließen des Maßverkörperungsmaterials Glas deuten lassen. All dies kann zu Meßfehlern bei der Positionsmessung in Längsrichtung der Maßverkörperung führen.

Dieser Nachteil kann auch durch eine Maßverkörperung gemäß DE 36 06 754 A1 nicht beseitigt werden.

Des weiteren ist es aus der DE 34 20 734 A1 bekannt, das Gehäuse einer gekapselten Längenmeßeinrichtung an einem Ende an einer Maschine zu fixieren und am anderen Ende über ein Deformationsglied elastisch zu befestigen.

Aus der EP 0 264 801 A1 ist es ferner bekannt, Maßstäbe oder Lineale auf in kleinen Bereichen rollbeweglich gehaltenen Kugeln aufzuspannen, die eine Längsführung bilden, wobei die Maßstäbe oder Lineale an einer einzigen Stelle gegenüber ihrer Fassung fixiert sind. Der mechanische Aufwand für eine derartige Halterung von Maßverkörperungen ist sehr hoch.

In DE-A-2 643 304 liegt ein Maßstab auf den beiden Rändern einer Auskehlungs Längs seiner gesamten Länge auf, wobei eine mittige Klebefixierung sowie weitere elastische Klebungen vorgesehen sind.

Ferner ist es aus der Werkstatt-Meßtechnik bekannt, den Maßstab an nur zwei Stellen so zu unterstützen, daß die Durchbiegung ein Minimum hat. Die genaue Lage dieser Auflagepunkte (bzw. -linien) differiert je nach Anforderung an die Durchbiegung des Maßstabs (z.B. in Abhängigkeit davon, ob sich die Teilung auf der Oberfläche oder in der neutralen Faser des Maßstabs befindet). So kann auf eine kleinste Verkürzung der Gesamtlänge (Besselsche Punkte) oder auf eine kleinste Verbiegung auf die ganze Länge, auf parallele Endflächen (Airysche Punkte) oder eine verschwindende Durchbiegung in der Mitte optimiert werden (siehe: Leinweber, Taschenbuch der Längenmeßtechnik, Springer-Verlag, 1954, Seite 139).

Es ist die Aufgabe der vorliegenden Erfindung, einen Maßstab für eine Positionsmeßeinrichtung zu schaffen, in dem die Maßverkörperung so zwangskräftefrei wie möglich gehalten ist und thermisch bedingte Spannungen zwischen der Maßverkörperung und seinem Trägerkörper vermieden sind.

Diese Aufgabe wird bei einer Positionsmeßeinrichtung gemäß den Merkmalen des Hauptanspruches gelöst.

Durch diese Art der Aufspannung sind die Maßverkörperung und ihr Trägerkörper mechanisch weitestgehend voneinander entkopppelt. Die Maßverkörperung kann sich bei Temperaturänderungen weitgehend kräftefrei gegenüber ihrem Trägerkörper bewegen und bleibende Verformungen in Folge thermischer Einwirkung treten deshalb nicht auf.

Anhand der Zeichnungen wird die Erfindung mit Hilfe von Ausführungsbeispielen noch näher erläutert.

Es zeigt
- Figur 1: eine Prinzip-Darstellung einer Längenmeßeinrichtung im Teilschnitt;
- Figur 2: eine Draufsicht auf einen Maßstab der Längenmeßeinrichtung gemäß Figur 1;
- Figur 3: einen Trägerkörper in Draufsicht;
- Figur 4: einen Schnitt durch den Trägerkörper gemäß Figur 3 entlang der Linie IV/IV und
- Figur 5: einen rahmenartigen Trägerkörper in Draufsicht.

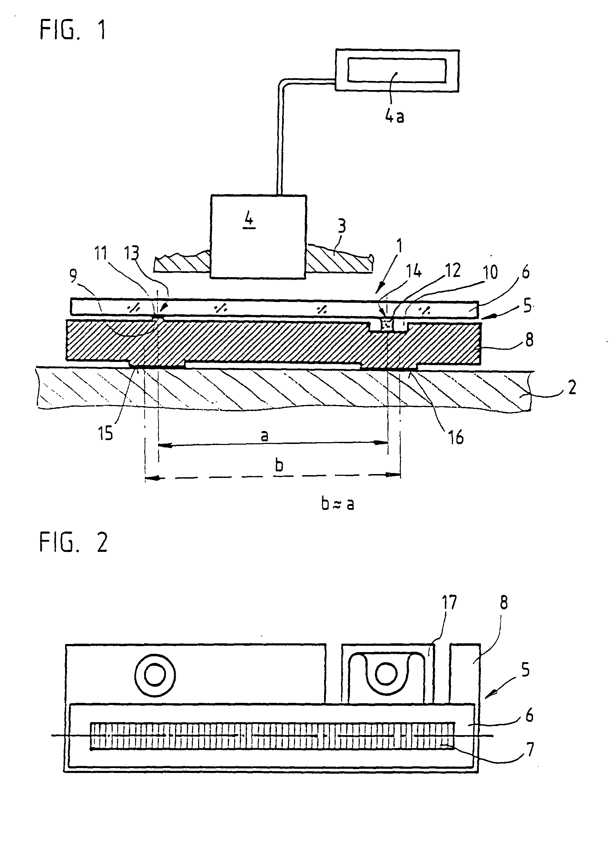

In Figur 1 ist in Prinzipdarstellung eine Positionsmeßeinrichtung 1 gezeigt. Sie dient zur Messung der Relativlage zweier Objekte wie Bett und Schlitten einer nicht näher bezeichneten Maschine. Von dieser Maschine sei hier der Schlitten als Objekt mit 2 bezeichnet. Das Bett als Objekt ist mit 3 bezeichnet und ebenfalls bruchstückhaft gezeigt. Am Bett 3 ist eine Abtasteinrichtung 4 befestigt, die einen Maßstab 5 abtastet. Die Abtasteinrichtung 4 ist mit einer Auswerteeinheit 4a zur Anzeige der gemessenen Position verbunden. Der Maßstab 5 ist am Schlitten 2 der Maschine befestigt.

Der Maßstab 5 besteht aus einer Maßverkörperung 6 die eine Teilung 7 trägt (in Figur 2 dargestellt). Die Maßverkörperung 6 ist auf einem Trägerkörper 8 befestigt. Der Trägerkörper 8 weist einen Steg 9 und eine Vertiefung 10 auf. In Richtung der Längserstreckung des Trägerkörpers 8 und der Maßverkörperung 6 weisen der Steg 9 und die Vertiefung 10 einen definierten Abstand a zueinander auf.

Mit Hilfe des Steges 9 und der Vertiefung 10 wird die Maßverkörperung 6 am Trägerkörper 8 befestigt. Diese Befestigung erfolgt durch Klebung.

Mittels eines fixierenden Klebers 11 wird die Maßverkörperung 6 über den Steg 9 in definierter Position und mit definierter Breite der Klebung am Trägerkörper 8 fixiert. Der fixierende Kleber 11 kann ein Epoxidharz sein.

Mittels eines elastischen Klebers 12 - der ein Silikonkleber sein kann - wird die Maßverkörperung 6 über die Vertiefung 10 mit verhältnismäßig dicker Klebefuge und - gegenüber der vorgenannten Fixierung - großer Elastizität elastisch am Trägerkörper 8 befestigt.

Die beiden genannten Befestigungen bilden im wesentlichen linienartige Auflager 13 und 14 die die Maßverkörperung 6 an geeigneten Bereichen unterstützen. Der gegenseitige Abstand a der Auflager 13 und 14 voneinander wird in Bezug auf die Länge der Maßverkörperung 6 nach den Regeln der Unterstützung von stabförmigen Körpern optimiert, was aus der Längenmeßtechnik an sich bekannt ist (siehe Leinweber a.a.0.).

Durch die beschriebene Befestigung der Maßverkörperung 6 am Trägerkörper 8 wird ein definiertes thermisches Verhalten für die Kombination von Maßverkörperung 6 und Trägerkörper 8 erzielt, die zusammen den Maßstab 5 bilden.

Um dieses definierte thermische Verhalten des Maßstabes 5 zu unterstützen, weist der Trägerkörper 8 zur Befestigung am Schlitten 2 Montageflächen-Bereiche 15 und 16 auf, deren Abstand b zueinander in Richtung der Längerstreckung des Trägerkörpers 8 dem Abstand a der Auflager 13, 14 angenähert entspricht.

Bezüglich des thermisch bedingten Ausdehnungsverhaltens ist es vorteilhaft, wenn einer der Montageflächen-Bereiche 15 den neutralen Punkt (bzw. Linie) bildet und dieser Punkt 15 quer zur Längserstreckung des Maßstabes 5 in Verlängerung mit dem fixierenden Auflager 13 eine neutrale Linie in Bezug auf das thermische Verhalten bildet.

An diesem neutralen Montageflächen-Bereich 15 wird der Maßstab 5 fest mit dem Schlitten 2 der Maschine in nicht gezeigter Weise verschraubt.

Zur weiteren Befestigung des Maßstabes 5 dient der Montageflächen-Bereich 16, der als Längen-Ausgleichselement 17 für thermisch bedingte Ausdehnungen ausgebildet ist. Dieses Ausgleichselement 17 kann durch ein in den Trägerkörper 8 eingearbeitetes Federparallelogramm gebildet werden, wie in den Figuren 2, 3 und 5 dargestellt ist.

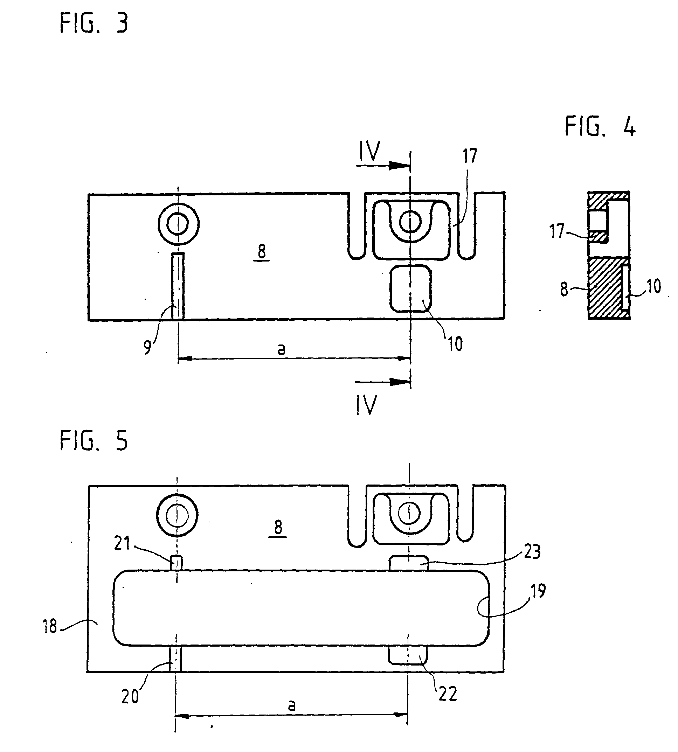

In Figur 4 ist der Trägerkörper 8 entlang der Linie IV/IV gemäß Figur 3 geschnitten dargestellt.

Das Ausgleichselement kann auch in nicht gezeigter Weise anders gebildet werden, beispielsweise mit Hilfe einer federbelasteten Langloch-Verschraubung, die sich quer zur Längserstreckung des Maßstabes 5 in der Nähe der elastischen Klebeverbindung 12 von Trägerkörper 8 und Maßverkörperung 6 befindet.

Aus Figur 1 ist ersichtlich, daß die Montageflächen-Bereiche 15 und 16 gegenüber der Unterseite des Trägerkörpers 8 abgestuft sind.

Um die Gefahr einer Verbiegung des Trägerkörpers 8 durch eine unebene Montagefläche zu minimieren, kann man die Rückseite des Trägerkörpers 8 außerhalb der definierten Montageflächen-Bereiche 15, 16 tiefer fräsen. Der Querschnitt des Trägerkörpers 8 ist nicht auf eine rechteckige Form beschränkt, sondern kann auch ein U-, L-, T-, I-förmiges o.a. Profil aufweisen.

Falls der Trägerkörper 8 als Rahmen 18 ausgelegt wird und unterhalb der Teilung 7 der Maßverkörperung 6 einen Durchbruch 19 aufweist, können auch sogenannte Durchlichtmaßstäbe verwendet werden.

Die die Maßverkörperung unterstützenden Auflager müssen in diesem Fall quer zur Längserstreckung des Trägerkörpers 8 durch den Durchbruch 19 unterbrochen sein. Die in Figur 5 gezeigten Auflager 20, 21 und 22, 23 müssen sich in diesem Fall auf beiden Längsseiten des Druchbruches 19 im wesentlichen in jeweils einer Linie fortsetzen.

Um einen Maßstab 5 gemäß der Erfindung zu schaffen, verwendet man bevorzugt für den Trägerkörper 8 ein Material mit ähnlichem thermischen Ausdehnungskoeffizienten wie dem der Maßverkörperung 6. Im Falle einer Maßverkörperung 6 aus ZERODUR™ ist z.B. INVAR™, eine Stahllegierung mit gesonders geringem Audehnungskoeffizienten, für den Trägerkörper 8 zu bevorzugen.

## Patentansprüche

1. Positionsmeßeinrichtung zur Messung zweier relativ zueinander verschieblicher Objekte (2,3) mit einem Maßstab (5) und einer diesen Maßstab (5) ablesenden Abtasteinheit (4), bei der der Maßstab (5) aus einer eine Teilung (7) tragenden Maßverkörperung (6) und einem Trägerkörper (8) für diese Maßverkörperung (6) besteht, und bei der die Maßverkörperung (6) an ihrem Trägerkörper (8) von einem Fixpunkt ausgehend längsverschieblich befestigt ist, dadurch gekennzeichnet, daß die Maßverkörperung (6) in Richtung ihrer Längserstreckung nur an zwei voneinander beabstandeten Bereichen am Trägerkörper (8) unterstützt aufliegt, und daß einer der Unterstützungs-Bereiche ein fixierendes Auflager (13) bildet und daß der andere Unterstützungs-Bereich ein elastisches Auflager (14) bildet, wobei die Unterstützungs-Bereiche von quer zur Längserstreckung der Maßverkörperung (6) im wesentlichen linienartigen Auflagern (13, 14) gebildet werden, deren Abstand (a) voneinander in Bezug auf die Länge der Maßverkörperung (6) nach den aus der Längenmeßtechnik bekannten Regeln der Unterstützung stabförmiger Körper zur Minimierung von deren Durchbiegung bestimmt wird.

2. Positionsmeßeinrichtung nach Anspruch 1, dadurch gekennzeichnet, daß der Trägerkörper (8) zur Bildung des fixierenden Auflagers (13) gegebenenfalls einen Steg (9) und zur Bildung des elastischen Auflagers (14) gegebenenfalls eine Vertiefung (10) aufweist.

3. Positionsmeßeinrichtung nach Anspruch 1, dadurch gekennzeichnet, daß die Befestigung der Maßstabverkörperung (6) am Trägerkörper (8) durch Klebung erfolgt, wobei das fixierende Auflager (13) durch fixierenden Kleber und das elastische Auflager (14) durch elastischen Kleber realisiert ist.

4. Positionsmeßeinrichtung nach Anspruch 1, dadurch gekennzeichnet, daß der Trägerkörper (8) bevorzugt zwei in Richtung der Längserstreckung des Trägerkörpers (8) voneinander beabstandete Montageflächen-Bereiche (15, 16) zur Montage an einem der Objekte (2) aufweist.

5. Positionsmeßeinrichtung nach Anspruch 4, dadurch gekennzeichnet, daß einer der Montageflächen-Bereiche (16) als Ausgleichselement (17) für thermisch bedingte Ausdehnungen ausgebildet ist.

6. Positionsmeßeinrichtung nach Anspruch 4, dadurch gekennzeichnet, daß der gegenseitige Abstand (b) der Montageflächen-Bereiche (15, 16) des Trägerkörpers (8) dem gegenseitigen Abstand (a) der Auflager (13, 14) der Maßverkörperung (6) zumindest angenähert entspricht.

7. Positionsmeßeinrichtung nach Anspruch 1, dadurch gekennzeichnet, daß der Trägerkörper (8) als Lamelle mit beliebigem Querschnitt ausgebildet ist.

8. Positionsmeßeinrichtung nach Anspruch 1, dadurch gekennzeichnet, daß der Trägerkörper (8) als Rahmen (18) ausgebildet ist, der im Bereich für die Aufnahme der Maßverkörperung (6) einen transparenten Durchbruch (19) aufweist.

9. Positionsmeßeinrichtung nach Anspruch 1, dadurch gekennzeichnet, daß die thermischen Ausdehnungskoeffizienten der Maßverkörperung (6) und des Trägerkörpers (8) ähnlich sind.

10. Positionsmeßeinrichtung nach Anspruch 1, dadurch gekennzeichnet, daß der Abstand (a) der Auflager (13, 14) dem Abstand der Besselschen Punkte entspricht.

11. Positionsmeßeinrichtung nach Anspruch 1, dadurch gekennzeichnet, daß der Abstand (a) der Auflager (13, 14) dem Abstand der Airyschen Punkte entspricht.

## Claims

1. Position measuring device for measuring two objects (2, 3) which are displaceable relative to one another, said device having a measurement scale (5) and a scanner unit (4) reading off this scale (5), in which the scale (5) comprises a material measure (6) carrying a division and a carrying body (8) for this material measure (6), and in which the material measure (6) is secured to its carrying body (8) so as to be longitudinally displaceable from a fixed point, **characterised in that** the material measure (6) lies supported on the carrying body (8) in the direction of its longitudinal extension only at two regions at a spacing from one another, and in that one of the support areas forms a fixing support (13) and in that the other support region forms a resilient support (14), the support regions being formed by substantially linear supports (13, 14) transversely with respect to the longitudinal extension of the material measure (6), the mutual spacing (a) of which supports in relation to the length of the material measure (6) is determined according to rules, known from length measuring technology, for supporting bar-shaped bodies to minimise the deflection of same.

2. Position measuring device according to claim 1, **characterised in that** the carrying body (8) possibly has a web (9) to form the fixing support (13) and possibly has a depression (10) to form the resilient support (14).

3. Position measuring device according to claim 1, **characterised in that** the material measure (6) is secured to the carrying body (8) by gluing, the fixing support (13) being realised by fixing adhesive and the resilient support (14) by resilient adhesive.

4. Position measuring device according to claim 1, **characterised in that** the carrying body (8) preferably has two mounting surface regions (15, 16), at a spacing from one another in the direction of the longitudinal extension of the carrying body (8), for mounting on one of the objects (2).

5. Position measuring device according to claim 4, **characterised in that** one of the mounting surface regions (16) is configured as a compensating element (17) for expansion caused thermally.

6. Position measuring device according to claim 4, **characterised in that** the mutual spacing (b) of the mounting surface regions (15, 16) of the carrying body (8) corresponds at least approximately to the mutual spacing (a) of the supports (13, 14) of the material measure (6).

7. Position measuring device according to claim 1, **characterised in that** the carrying body (8) is configured as a bar with any type of cross section.

8. Position measuring device according to claim 1, **characterised in that** the carrying body (8) is configured as a frame (18), which has a transparent opening (19) in the region for receiving the material measure (6).

9. Position measuring device according to claim 1, **characterised in that** the thermal expansion coefficients of the material measure (6) and of the carrying body (8) are similar.

10. Position measuring device according to claim 1, **characterised in that** the spacing (a) of the supports (13, 14) corresponds to the spacing of the Bessel points.

11. Position measuring device according to claim 1, **characterised in that** the spacing (a) of the supports (13, 14) corresponds to the spacing of. the Airy points.

## Revendications

1. Dispositif de mesure de position pour la mesure de deux objets (2, 3) déplaçables en translation l'un par rapport à l'autre, comprenant une règle (5) et une unité de lecture (4) explorant cette règle (5), dans lequel la règle (5) se compose d'un corps de règle (6) portant une graduation (7) et d'un corps de support (8) pour le corps de règle (6), et dans lequel le corps de règle (6) est fixé au corps de support (8) de façon mobile en translation à partir d'un point fixe, caractérisé par le fait que le corps de règle (6) repose sur le corps de support (8) avec effet de soutien uniquement en deux zones espacées l'une de l'autre dans sa direction longitudinale et que l'une des zones de soutien constitue un appui fixe (13) et l'autre zone de soutien constitue un appui élastique (14), les zones de soutien étant formées par des appuis (13, 14) essentiellement linéaires transversalement à la direction longitudinale du corps de règle (6), dont la distance réciproque (a) par rapport à la longueur du corps de règle (6) est déterminée selon les règles de soutien de corps en forme de barreau, connues dans la technique de mesure de longueurs en vue de minimiser leur flexion.

2. Dispositif de mesure de position suivant la revendication 1, caractérisé par le fait que le corps de support (8), pour la formation de l'appui fixe (13), présente le cas échéant une saillie (9) et, pour la formation de l'appui élastique (14), présente le cas échéant un creux (10).

3. Dispositif de mesure de position suivant la revendication 1, caractérisé par le fait que la fixation du corps de règle (6) au corps de support (8) s'effectue par collage, l'appui fixe (13) étant réalisé par une colle rigide et l'appui élastique (14) par une colle élastique.

4. Dispositif de mesure de position suivant la revendication 1, caractérisé par le fait que le corps de support (8) présente de préférence deux zones de surface de montage (15, 16) espacées l'une de l'autre dans la direction longitudinale du corps de support (8) pour le montage sur l'un des objets (2).

5. Dispositif de mesure de position suivant la revendication 4, caractérisé par le fait que l'une des zones de surface de montage (16) est réalisée sous forme d'élément de compensation pour des dilatations d'origine thermique.

6. Dispositif de mesure de position suivant la revendication 4, caractérisé par le fait que la distance réciproque (b) des zones de surface de montage (15, 16) du corps de support (8) correspond au moins approximativement à la distance réciproque (a) des appuis (13, 14) du corps de règle (6).

7. Dispositif de mesure de position suivant la revendication 1, caractérisé par le fait que le corps de support (8) est réalisé sous forme de lamelle de section quelconque.

8. Dispositif de mesure de position suivant la revendication 1, caractérisé par le fait que le corps de support est réalisé sous forme de cadre (18) présentant un ajour transparent (19) dans la zone de réception du corps de règle (6).

9. Dispositif de mesure de position suivant la revendication 1, caractérisé par le fait que les coefficients de dilatation thermique du corps de règle (6) et du corps de support (8) sont semblables.

10. Dispositif de mesure de position suivant la revendication 1, caractérisé par le fait que la distance réciproque (a) des appuis (13, 14) correspond à la distance réciproque des points de Bessel.

11. Dispositif de mesure de position suivant la revendication 1, caractérisé par le fait que la distance réciproque (a) des appuis (13, 14) correspond à la distance réciproque des points d'Airy.
